(19) Europäisches Patentamt

European Patent Office

Office européen des brevets

(11) **EP 1 559 215 B1**

## (12) EUROPÄISCHE PATENTSCHRIFT

(45) Veröffentlichungstag und Bekanntmachung des Hinweises auf die Patenterteilung:
**27.12.2006 Patentblatt 2006/52**

(21) Anmeldenummer: **03776794.4**

(22) Anmeldetag: **13.10.2003**

(51) Int Cl.:
*H04B 10/158* (2006.01)   *H04B 10/148* (2006.01)

(86) Internationale Anmeldenummer:
**PCT/DE2003/003385**

(87) Internationale Veröffentlichungsnummer:
**WO 2004/042968 (21.05.2004 Gazette 2004/21)**

(54) **EMPFÄNGER FÜR WINKELMODULIERTE OPTISCHE SIGNALE**

RECEIVER FOR ANGLE-MODULATED OPTICAL SIGNALS

RECEPTEUR POUR SIGNAUX OPTIQUES A MODULATION ANGULAIRE

(84) Benannte Vertragsstaaten:
**DE ES FR GB IT PT**

(30) Priorität: **07.11.2002 DE 10251889**

(43) Veröffentlichungstag der Anmeldung:
**03.08.2005 Patentblatt 2005/31**

(73) Patentinhaber: **SIEMENS AKTIENGESELLSCHAFT**
**80333 München (DE)**

(72) Erfinder: **ROHDE, Harald**
**81541 München (DE)**

(56) Entgegenhaltungen:
**WO-A-00/44074**      **US-A- 5 027 435**
**US-A- 5 742 418**

EP 1 559 215 B1

**Beschreibung**

Die Erfindung betrifft einen Empfänger für winkelmodulierte optische Signale nach dem Oberbegriff des Patenanspruches 1.

Bisherige optische Übertragungssysteme modulieren die zu übertragende Information auf die Intensität des zur Übertragung benutzen Lichtes auf. In einem Empfangssystem wandelt eine Photodiode die optischen amplitudenmodulierten Signale in elektrische Signale um. In bestimmten Konfigurationen-oder Parameterbereichen eines optischen Übertragungssystems kann es sich als vorteilhaft erweisen, die Information auf die Phase oder der Frequenz des zu übertragenden Lichtes zu modulieren. In diesem Fall ist eine einfache Photodiode nicht mehr ausreichend, um die Information aus den phasen- oder frequenzmodulierten Signalen zu extrahieren.

Bisher existieren zwei grundsätzliche Konzepte zur eine Phasendetektion optischer Lichtefelder. Beide Konzepte weisen eine Reihe von Vor- und Nachteilen auf und werden in einigen Variationen benutzt.

Der erste Konzept basiert auf einem Homodynempfang. Das einfallende Lichtfeld des phasenmodulierten optischen Signals wird mit einem zweiten Lichtfeld gleicher Frequenz und mit definierter Phase überlagert (hier wird auf Phasenmodulation aus Klarheitsgründen eingeschränkt). Dieses zweite Lichtfeld kann entweder von einem externen Laser als "Lokaloszillator" erzeugt werden oder auch ein - um eine Bitdauer - zeitverzögerter Teil des übertragenen Lichtes sein, was unter der Bezeichung "Selbst-Homodynempfang" bekannt ist. Die beiden optischen Felder interferieren auf einer Photodiode je nach Phasenlage der Felder konstruktiv oder destruktiv und die Photodiode gibt einen zum Quadrat des Cosinus der relativen Phasenlage der Felder proportionalen Strom aus.

Der zweite Konzept basiert auf einem Heterodynempfang. Das einfallende Lichtfeld des phasenmodulierten optischen Signals wird mit einem zweiten Lichtfeld mit verschiedener Frequenz überlagert. Beide optische Felder interferieren auf einer Photodiode. Die Photodiode liefert einen Wechselstrom, dessen Frequenz der Differenzfrequenz der beiden optischen Felder entspricht und dessen Phase durch die Phase des übertragenen optischen Feldes gegeben ist. Ein elektrischer Phasendetektor erzeugt aus diesem Wechselstromsignal einen amplitudenmodulierten Strom.

In beiden Fällen wird als zweites Lichtfeld entweder ein externer Laser oder ein (i. A. um einer Bitdauer) zeitverzögerter Anteil des übertragenen Lichtfeldes benutzt.

Ein externer Laser weist Vorteile bezüglich der Empfängerempfindlichkeit auf, andererseits sind entweder die Anforderungen an die Laserstabilität erheblich ("Homodyndetektion") oder es muss eine weitere elektrische Zwischenstufe eingefügt werden ("Heterodyndetektion").

Überlagerung des empfangenen Lichtfeldes mit einem zeitverzögerten Anteil des gleichen Feldes ("Selbst-Homodynempfang") ist technologisch am einfachsten zu realisieren, allerdings ist die Empfängerempfindlichkeit i. A. um einen Faktor 4 geringer als bei der Detektion mit Hilfe einer externen Lichtquelle.

Aufgabe der Erfindung ist es, einen einfachen und empfindlichen Empfänger für die Ermittlung der Phaseninformation aus dem übertragenen Licht eines winkelmodulierten optischen Signals anzugeben und weiterhin diese Phaseninformation in ein amplitudenmoduliertes elektrisches Signal umzuwandeln.

Eine Lösung der Aufgabe erfolgt hinsichtlich ihres Vorrichtungsaspekts durch einen Empfänger mit den Merkmalen des Patentanspruchs 1.

Der erfindungsgemäße Empfänger weist einen optischen Resonator zur Speicherung des optischen Feldes des winkelmodulierten optischen Signals auf. Als optischer Resonator kann ein aus "Laserspektroskopie, Grundlagen und Techniken, W. Demtröder, Springer, 2000" bekannter Fabry-Perot-Resonator verwendet werden. Der optische Resonator ist so dimensioniert, dass die Speicherzeit des optischen Feldes etwa eine halbe Bitdauer beträgt. Die Transmissionsfrequenz des optischen Resonators ist auf die Lichtfrequenz abgestimmt. Bei bestimmten Parametern ist die Halbwertsbreite der Transmission im Bereich weniger GHz, so daß die Abstimmung der Resonatorfrequenz nicht allzu kritisch ist.

In einem verlustfreien optischen Fabry-Perot-Resonator, in den Licht mit der Resonanzfrequenz eingekoppelt wird, entsteht ein stark überhöhtes stehendes Lichtfeld. Dieses Lichtfeld dringt durch die teildurchlässigen Spiegel des Resonators nach Außen. An der Seite des Resonators, an dem das Licht aus dem winkelmodulierten optischen Signal eingekoppelt wird, hat das austretende Feld die umgekehrte Phase des eintretenden Feldes, so dass es mit dem eintretenden Feld destruktiv interferiert und kein Licht in den Eingangskanal zurückreflektiert wird. Das aus der Ausgangsseite des Resonators austretende Licht erfährt keine Interferenz durch ein externes weiteres Lichtfeld. Der Resonator erscheint bei einem konstanten Lichtfeld mit der Resonanzfrequenz transparent.

Ändert sich die Phase des einfallenden Lichtfeldes um den Wert $\pi$, wird sich aus der destruktiven Interferenz am Resonatoreingang konstruktive Interferenz bilden und daher wird Licht zurückreflektiert. Dafür wird auf "Optical decay from a Fabry-Perot cavity faster than the decay time", H. Rohde, J. Eschner, F. Schmidt-Kaler, R. Blatt, J. Opt. Soc. Am. B 19, 1425-1429, 2002 hingewiesen.

Der Empfänger eignet sich ebenfalls für ein frequenz- wie ein phasenmoduliertes Signal. Deshalb kann der Empfänger allgemein als Empfänger für ein winkelmoduliertes Signal, d. h. mit der Phase oder mit der Frequenz verwendet werden. Im folgenden wird aus Klarheitsgründen auf einem Empfänger für ein phasenmoduliertes Signal hingewiesen.

Das rückreflektierte Licht wird vom Eingangslicht mittels einer optischen Auskoppeleinrichtung wie einem Zirkulator oder eine Kombination aus einem Polarisationsstrahlteiler und einer Wellenplatte getrennt und mittels eines optisch-elektrischen Wandlers wie eine Photodiode detektiert. Der Photodiodenstrom stellt somit ein Maß für die Ermittlung einer Phasenänderung bzw. -wechsel des einfallenden Lichtes dar.

Wesentliche Vorteile des erfindungsgemäßen Empfängers sind darin zu sehen, dass die Empfindlichkeit gegenüber dem Selbst-Homodynempfang um einen Faktor von bis zu 2 gesteigert ist, und dass er dabei nur wenig komplexer als selbiger und deutlich einfacher als Lösungen mit einem zusätzlichen Laser zu realisieren ist.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:

Fig. 1: den Verbesserungsfaktor der Signal-Rauschabstände zwischen einem Homodynempfang und dem erfindungsgemäßen Empfänger,

Fig. 2: einen ersten erfindungsgemäßen Empfänger,

Fig. 3: einen zweiten erfindungsgemäßen Empfänger.

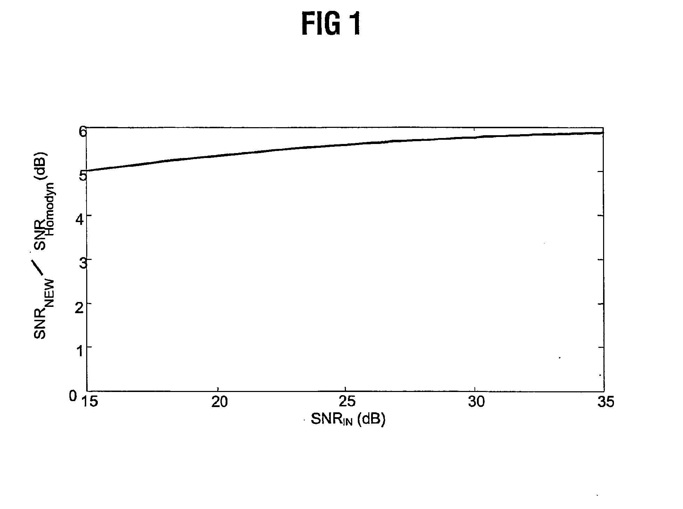

In **Fig. 1** ist der Wert eines Verbesserungsfaktors $\alpha$ der Signal-Rauschabstände zwischen einem herkömmlichen Homodynempfänger und dem erfindungsgemäßen Empfänger als Funktion der Signal-Rauschabstände des Eingangslichtes $SNR_{In} = \dfrac{E_S^2}{E_N^2}$ dargestellt. $E_S$ bezeichnet das Signalfeld und $E_N$ das Rauschfeld des Eingangssignals am optischen Resonator. Zur Klarstellung der Erfindung im Bezug auf dem optischen Resonator werden im folgenden wichtige Resonatorparameter erläutert.

Die Eigenschaften einen optischen Fabry-Perot-Resonators, bestehend aus zwei Spiegeln mit der Reflektivität R im Abstand L werden (vereinfacht) durch folgende Parameter bestimmt:

1. Ein freier Spektralbereich FSR gibt den Frequenzabstand der Resonatormoden an.

$$FSR = \frac{c}{2L}$$

wobei c die Lichtgeschwindigkeit bezeichnet.

2. Eine Halbwertsbreite $\Delta\nu$ der Resonanz ist durch

$$\Delta\nu = \frac{c}{2L} * \frac{1 - R}{\pi\sqrt{R}}$$

gegeben.

3. Daraus ergibt sich die Finesse F als Quotient aus dem freiem Spektralbereich FSR und der Halbwertsbreite $\Delta\nu$ zu:

$$F = \frac{FSR}{\Delta\nu} = \frac{\pi\sqrt{R}}{1 - R} \approx \frac{\pi}{1 - R} \qquad \text{für } R \approx 1.$$

4. Eine Speicherzeit $\tau$ eines optischen Fabry-Perot-Resonators als Zeit, nach der nach Abschalten des Eingangsfeldes die Intensität des im Resonator gespeicherten Feldes um den Faktor 1/e abgefallen ist, beträgt:

$$\tau = \frac{F * L}{\pi \ c}.$$

Mit einer Resonatorlänge von L=1 mm und einer Speicherzeit von $\tau$ = 50 ps (halbe Bitdauer bei 10 Gbit/s) ergibt sich eine Finesse von F $\approx$ 50 und daraus eine Spiegelreflektivität R von ca. 0,94%. Der freie Spektralbereich FSR beträgt 150 GHz und die Halbwertsbreite $\Delta\nu$ = 3GHz.

Im Folgenden wird die verbesserte Empfangsempfindlichkeit des erfindungsgemäßen Empfängers gegenüber eines Selbst-Homodynempfangs dargestellt.

Das optische Eingangsfeld wird als Summe aus dem Signalfeld $E_S$ und dem Rauschfeld $E_N$ dargestellt: $E_{In} = E_S + E_N$.

Bei einem Selbst-Homodynempfang spaltet ein Strahlteiler das Feld in zwei Teilfelder $E_1$, $E_2$ auf:

$$E_1 = \frac{1}{\sqrt{2}} E_{In} = \frac{1}{\sqrt{2}} (E_S + E_N)$$

$$E_2 = \frac{1}{\sqrt{2}} E_{In} = \frac{1}{\sqrt{2}} (E_S + E_N)$$

Nach Zeitverzögerung eines Feldes um eine Bitdauer werden beide Felder wieder mit einem weiteren Strahlteiler addiert und einer der Ausgänge des Strahlteilers mit einer Photodiode detektiert. Es wird angenommen, dass sich die Phasenlage nicht geändert hat und daher die Zeitverzögerung nicht explizit in die Formel hereingeschrieben werden muss. Das Feld $E_{PD}$ am Ort der Photodiode ist:

$$E_{PD} = \frac{1}{\sqrt{2}} E_1 + \frac{1}{\sqrt{2}} E_2.$$

Daraus ergibt sich die optische Leistung $P_{PD}$ am Ort der Photodiode zu:

$$P_{PD} \propto E_{PD}^2 = E_S^2 + E_N^2 + 2E_S E_N$$

Die Signal-Rauschabstände $SNR_{Ho\ mod\ yn}$ des Selbst-Homodynempfangs sind folglich:

$$SNR_{Ho\ mod\ yn} = \frac{E_S^2}{E_N^2 + 2 * E_S E_N}.$$

Bei dem erfindungsgemäßen Empfänger ist im eingeschwungenen Zustand im Inneren des Resonators die Feldstärke des kohärenten Eingangsfeldes $E_s$ um den Faktor $\frac{F}{\pi}$ überhöht, während das Rauschfeld nur um dem Faktor 1 - R) abgeschwächt in den Resonator eindringt, da die Überhöhung nicht kohärent erfolgt. Das Feld $E_{Res}$ im Inneren des Resonators ist also:

$$E_{Res} = \frac{F}{\Pi} * E_S + (1 - R) * E_N \, .$$

Das Feld $E_{Res}$ im Inneren des Resonators dringt durch die teildurchlässigen Resonatorspiegel mit einer Abschwächung um den Faktor (1-R) nach Aussen. Tritt ein Phasenwechsel des eingestrahlten Feldes auf, so interferiert das aus dem Resonator austretende Licht nicht mehr destruktiv mit dem einfallenden Feld und Licht verlässt den optischen Resonator in Gegenrichtung zum einfallenden Licht.

Das sich in Gegenrichtung zum einfallenden Licht ausbreitende Feld $E_{Reflektiert}$ besteht aus dem am Resonatorspiegel reflektierten Anteil des Eingangslichtfeldes $E_{IN}$ und dem durch den halbdurchlässigen Resonatorspiegel austretenden Anteil des im Resonator gespeicherten Lichtfeldes $E_{Res}$.

$$E_{Reflektiert} = R * E_{IN} + (1 - R) * E_{Res}$$

$$E_{Reflektiert} = R * (E_S + E_N) + (1 - R) * (\frac{F}{\Pi} E_S + (1 - R) * E_N)$$

Mit $F \approx \frac{\Pi}{1 - R}$ und $R \cong 1$ und daher 1-R) * (1-R) $\cong 0$ ergibt sich:

$$E_{Reflektiert} = 2 * E_S + E_N \, .$$

Die Leistung $P_{PD}$ an der Photodiode ist:

$$P_{PD} = E_{Reflektiert}^2 = 4 * E_S^2 + E_N^2 + 4 * E_S E_N \, .$$

Die Signal-Rauschabstände $SNR_{NEW}$ des erfindungsgemäßen Empfängers sind folglich:

$$SNR_{NEW} = \frac{4 * E_S^2}{E_N^2 + 4 * E_S E_N} \, .$$

Damit kann der Verbesserungsfaktor $\alpha$ der Signal-Rauschabstände zwischen einem herkömmlichen Homodynempfänger und dem erfindungsgemäßen Empfänger berechnet werden:

$$\frac{SNR_{NEW}}{SNR_{Homodyn}} = 4 * \frac{E_N^2 + 2 * E_N E_S}{E_N^2 + 4 * E_N E_S} = \alpha$$

Der Wert des Verbesserungsfaktors $\alpha$ hängt vom Signal-Rausch Verhältnis $SNR_{In} = \frac{E_S^2}{E_N^2}$ des Eingangslichtes ab. Die Figur 1 stellt der Verbesserungsfaktor $\alpha$ in Abhängigkeit vom $SNR_{In}$ dar.

Der Wert für den Verbesserungsfaktor α gilt für den Zeitpunkt des Phasenwechsels, danach nimmt das Signal exponentiell ab. Unter der Annahme, dass die Photodiode und die Auswerteelektronik nicht schnell genug sind, um nur den Spitzenwert zu detektieren, sondern über eine Bitdauer integrieren, muss der Verbesserung gegenüber dem Selbst-Homodynempfang um den Faktor $\frac{1}{2} - \frac{1}{2} * e^2) = 0,43$ reduziert werden.

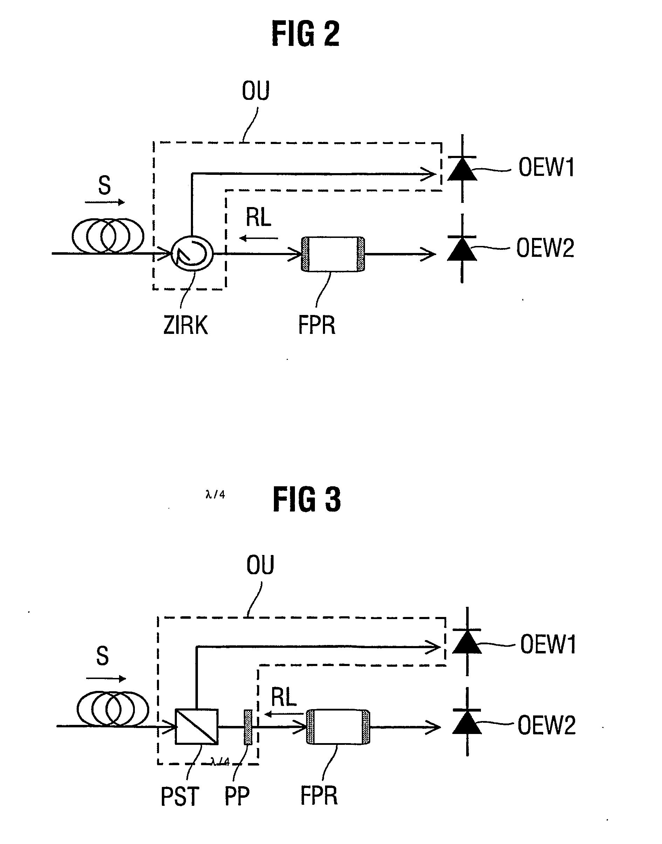

In **Figur 2** ist ein erster erfindungsgemäßer Empfänger für ein phasenmoduliertes optisches Signal S dargestellt. Einem optischen Resonator FPR wird das phasenmodulierte optische Signal S eingespeist. An einem optisch-elektrischen Wandler OEW1 zur Ermittlung einer Phasenänderung des phasenmodulierten optischen Signals S aus an dem optischen Resonator FPR reflektiertem Licht RL ist eine optische Auskoppeleinrichtung OU dem optischen Resonator FPR vorgeschaltet.

Optional kann ein zweiter optisch-elektrischer Wandler OEW2 als z. B. eine Photodiode dem optischen Resonator FPR nachgeschaltet werden, um durch eine Differenzbildung des Signales bzw. eine Mittelung des Rauschens am ersten optischelektrischer Wandler OEW1 die Empfindlichkeit zu steigern.

Für ein frequenzmodulatierte Signal mit einem definierten Freuqmezhub kann man theoretisch beide folgende Fälle unterscheiden: bei einem Empfänger mit Frequenzmodulation, wobei der Frequenzhub kleiner als die Bandbreite des optischen Resonators FPR ist, kann die Frequenzmodulation in ähnlicher Weise wie die Phasenmodulation betrachtet werden; bei einem Empfänger mit Frequenzmodulation, wobei der Frequenzhub größer als die Bandbreite des optischen Resonators FPR ist, wird der optische Resonator FPR als frequenzselektiver Spiegel wirken, d. h. eine Frequenz wird durchgelassen, wenn sie mit der Resonanzfrequenz des optischen Resonators FPR übereinstimmt und die andere wird reflektiert. Auf beiden Photodioden OEW1, OEW2 würden zwei komplementäre Binärsignale zur Detektion eines Frequenzsprunges im ursprünglichem frequenzmodulierten Signals aufgenommen werden. In beiden Fällen eignet sich der erfindungsgemäße Empfänger gut.

Der optische Resonator FPR ist hier ein herkömmlicher Fabry-Perot-Resonator. Die optische Auskoppeleinrichtung OU weist einen Zirkulator ZIRK auf, der dem optischen Resonator FPR vorgeschaltet ist und dessen Ausgang an dem optisch-elektrischen Wandler OEW1 angeschlossen ist.

In **Figur 3** ist ein zweiter erfindungsgemäßer Empfänger gemäß Figur 2 dargestellt, wobei eine andere Art von optischer Auskoppeleinrichtung OU verwendet ist. Die optische Auskoppeleinrichtung OU weist einen Polarisationsstrahlteiler PST mit einer nachgeschalteten Polarisationsplatte PP auf, so dass das phasenmodulierte optische Signal S und das reflektierte Licht RL zur Ermittlung eines Phasenwechsels unterschiedliche durch den Polarisationsstrahlteiler trennbare Polarisationen aufweisen.

Weitere Varianten von optischen Auskoppeleinrichtungen OU sind realisierbar. Wichtig ist die Rückgewinnung des reflektierten Lichtes RL am Eingang des optischen Resonators FPR, das die Information eines Phasenwechsels des phasenmodulierten Signals S liefert. Andere Lichtanteile müssen unterdrückt werden.

**Patentansprüche**

1. Empfänger für ein winkelmoduliertes optisches Signal (S) mit einer Lichtfrequenz, das in einen optischen Resonator (FPR) eingespeist wird,
   indem dem optischen Resonator (FPR) eine optische Auskoppeleinrichtung (OU) für ein vom optischen Resonator (FPR) reflektiertes Licht (RL) vorgeschaltet ist,
   und bei dem der optischen Auskoppeleinrichtung (OU) ein optisch-elektrischer Wandler (OEW1) eingerichtet zur Detektion der vom optischen Resonator reflektierten Lichtes (RL) nachgeschaltet ist,
   **dadurch gekennzeichnet,**
   **dass** zur Ermittlung der Phase des optischen Signals (S) der optische Resonator (FPR) eine Resonanzfrequenz aufweist, die auf die Lichtfrequenz abgestimmt ist.

2. Empfänger nach Anspruch 1,
   **dadurch gekennzeichnet,**
   **dass** der optische Resonator (FPR) ein Fabry-Perot-Resonator ist.

3. Empfänger nach einem der Ansprüche 1 bis 2,
   **dadurch gekennzeichnet,**
   **dass** die optische Auskoppeleinrichtung (OU) einen Zirkulator (ZIRK) aufweist, der dem optischen Resonator (FPR) vorgeschaltet ist und dessen Ausgang an dem optisch-elektrischen Wandler (OEW1) angeschlossen ist.

4. Empfänger nach einem der Ansprüche 1 bis 2,

**dadurch gekennzeichnet,**
**dass** die optische Auskoppeleinrichtung (OU) einen Polarisationsstrahlteiler (PST) mit einer nachgeschalteten Polarisationsplatte (PP) aufweist, so dass das winkelmodulierte optische Signal (S) und das reflektierte Licht (RL) unterschiedliche durch den Polarisationsstrahlteiler trennbare Polarisationen aufweisen.

5. Empfänger nach einem der vorhergehenden Ansprüche,
   **dadurch gekennzeichnet,**
   **dass** zur Steigerung der Empfindlichkeit ein zweiter optisch-elektrischer Wandler (OEW2) dem optischen Resonator (FPR) nachgeschaltet ist.

6. Empfänger nach einem der vorhergehenden Ansprüche,
   **dadurch gekennzeichnet,**
   **dass** eine Kodierung zur Zuordnung der Phasenänderung mittels des durch den optischen Resonator (FPR) reflektierten und gegebenenfalls transmittierten Lichtes vorgesehen ist.

**Claims**

1. Receiver for an angle-modulated optical signal (S) having a light frequency which is injected into an optical resonator (FPR),
   said optical resonator (FPR) being preceded by an optical coupling-out device (OU) for reflected light (RL) from the optical resonator (FPR),
   and wherein the optical coupling-out device (OU) is followed by an opto-electric transducer (OEW1) set up to detect the reflected light (RL) from the optical resonator,
   **characterised in that**, to determine the phase of the optical signal (S), the optical resonator (FPR) has a resonance frequency which is tuned to the light frequency.

2. Receiver according to Claim 1,
   **characterised in that** the optical resonator (FPR) is a Fabry-Perot resonator.

3. Receiver according to one of Claims 1 to 2,
   **characterised in that** the optical coupling-out device (OU) has a circulator (ZIRK) connected preceding the optical resonator (FPR) and whose output is connected to the opto-electric transducer (OEW1).

4. Receiver according to one of Claims 1 to 2,
   **characterised in that** the optical coupling-out device (OU) has a polarisation beam splitter (PST) with a following polarisation plate (PP) so that the angle-modulated optical signal (S) and the reflected light (RL) have different polarisations which can be separated by the polarisation beam splitter.

5. Receiver according to one of preceding claims,
   **characterised in that** a second opto-electric transducer (OEW2) is connected following the optical resonator (FPR) in order to increase the sensitivity.

6. Receiver according to one of preceding claims,
   **characterised in that** there is provided a coding for assignment of the phase variation by means of the light reflected and possibly transmitted by the optical resonator (FPR).

**Revendications**

1. Récepteur pour un signal optique (S) à modulation angulaire ayant une fréquence de lumière alimentée dans un résonateur optique (FPR),
   du fait qu'un dispositif de découplage optique (OU) est installé en amont du résonateur optique (FPR) pour une lumière réfléchie (RL) par le résonateur optique (FPR),
   et dans lequel un convertisseur opto-électrique (OEW1), configuré pour la détection de la lumière réfléchie (RL) par le résonateur optique, est installé en aval du dispositif de découplage optique (OU),
   **caractérisé en ce**
   **que** pour déterminer la phase du signal optique (S), le résonateur optique (FPR) présente une fréquence de résonance qui est accordée à la fréquence de la lumière.

2. Récepteur selon la revendication 1,
   **caractérisé en ce**
   **que** le résonateur optique (FPR) est un résonateur de Fabry-Pérot.

3. Récepteur selon l'une quelconque des revendications 1 à 2,
   **caractérisé en ce**
   **que** le dispositif de découplage optique (OU) présente un circulateur (ZIRK) qui est installé en amont du résonateur optique (FPR) et dont la sortie est raccordée au convertisseur opto-électrique (OEW1).

4. Récepteur selon l'une quelconque des revendications 1 à 2,
   **caractérisé en ce**
   **que** le dispositif de découplage optique (OU) présente un séparateur de faisceaux de polarisation (PST) doté d'une plaque de polarisation (PP) installée en aval, de sorte que le signal optique (S) à modulation angulaire et la lumière réfléchie (RL) présentent différentes polarisations séparables au moyen du séparateur de faisceaux de polarisation.

5. Récepteur selon l'une quelconque des revendications précédentes,
   **caractérisé en ce**
   **qu'**un deuxième convertisseur opto-électrique (OEW2) est installé en aval du résonateur optique (FPR) pour augmenter la sensibilité.

6. Récepteur selon l'une quelconque des revendications précédentes,
   **caractérisé en ce**
   **qu'**un codage est prévu pour l'affectation de la modification de phase au moyen de la lumière réfléchie et le cas échéant transmise par le résonateur optique (FPR).

# FIG 1

# FIG 2

OU

S

RL

ZIRK          FPR

OEW1

OEW2

# FIG 3

λ/4

OU

S

RL

PST   PP   FPR

λ/4

OEW1

OEW2